# EUROPÄISCHE PATENTSCHRIFT

(11) **EP 1 542 851 B1**
(45) Veröffentlichungstag und Bekanntmachung des Hinweises auf die Patenterteilung: **22.06.2011**
(21) Anmeldenummer: 03798030.7
(22) Anmeldetag: 26.09.2003
(51) Int. Cl.: B29C 47/02, A01G 25/02

(54) **VORRICHTUNG ZUR KONTINUIERLICHEN HERSTELLUNG VON TROPFBEWÄSSERUNGSROHREN**
DEVICE FOR CONTINUOUSLY PRODUCING DRIP IRRIGATION TUBES
DISPOSITIF DE PRODUCTION CONTINUE DE TUYAUX D'IRRIGATION GOUTTE A GOUTTE

(30) Priorität: 27.09.2002 EP 02405837
(43) Veröffentlichungstag der Anmeldung: 22.06.2005
(73) Patentinhaber: THE Machines Yvonand SA, 1462 Yvonand (CH)
(72) Erfinder: KERTSCHER, Eberhard, CH-1462 Yvonand (CH); BERNAUER, Thomas, CH-2000 Neuchâtel (CH)
(74) Vertreter: BOVARD AG
(86) Internationale Anmeldenummer: PCT/CH2003/000644
(87) Internationale Veröffentlichungsnummer: WO 2004/028778

(56) Entgegenhaltungen:
- EP-A- 0 480 632
- WO-A-00/10378
- WO-A-99/62691
- US-B1- 6 280 554
- US-B1- 6 308 902

## Beschreibung

Die vorliegende Erfindung bezieht sich auf eine Vorrichtung zur kontinuierlichen Herstellung von Tropfbewässerungsrohren, umfassend eine Extrusionseinrichtung zur Erzeugung eines Rohrkörpers, eine Kalibriereinrichtung und eine Kühleinrichtung für den Rohrkörper, eine Zuführeinrichtung für Dosierelemente in den Rohrkörper entlang einer Führungsbahn, und Mittel zum Verbinden der Dosierelemente mit der Innenwandung des Rohrkörpers, bestehend aus einem Anpresselement, das durch den Endbereich der Führungsbahn gebildet ist und in den extrudierten Rohrkörper hineinragt, und einer Anpressrolle, die aussenseitig im Bereich des Anpresselementes an den Rohrkörper anpressbar ist, wobei die Kalibriereinrichtung aus einem rohrförmigen Körper gebildet ist, dessen Einführbereich sich auf den gewünschten Durchmesser des Rohrkörpers verengt und dessen lang gestreckter Körperbereich in die Kühleinrichtung hineinragt und mit einer Ausnehmung versehen ist, in welche die Anpressrolle hineinragt, so dass der Anpress- und Verbindvorgang der Dosierelemente mit der Innenwandung des Rohrkörpers innerhalb der Kalibriereinrichtung erfolgt.

Mit derartigen bekannten Vorrichtungen werden Tropfbewässerungsrohre hergestellt, mit welchen eine direkte Bewässerung von Pflanzen erreichbar ist. Im Bereich jeder Pflanze sind in diesem Rohr Dosierelemente angebracht, durch welche das Wasser über eine Bohrung aus dem Tropfbewässerungsrohr tropfweise ausgelassen wird. Durch diese direkte tropfweise Bewässerung der einzelnen Pflanzen wird nicht in unnötiger Weise eine grosse Menge des Wassers verschwendet, wie dies üblicherweise bei Bewässerungsanlagen geschieht, mittels welchen das Wasser durch Spritzanlagen grossflächig verteilt wird. Mit der Tropfbewässerung wird ein äusserst wirtschaftliches System angewendet, das Wasser kann sehr sparsam eingesetzt werden.

Aus der EP-A-0 970 602 ist eine Einrichtung zur Herstellung derartiger Tropfbewässerungsrohre dargestellt. Hierbei wird durch eine Extrusionseinrichtung ein Rohrkörper erzeugt, der eine Kalibrier- und Kühlvorrichtung durchläuft. In den Rohrkörper eingeführt werden fortlaufend Dosierelemente, die kontinuierlich vorgeschoben werden. Sobald das vorderste Dosierelement mit der extrudierten Rohrwandung in Kontakt kommt, wird dieses mitgezogen und mittels einem im Rohrkörper angebrachten Anpresskörper und einem aussenseitig auf die Rohrwandung wirkenden Anpressband mit dem Rohrkörper verbunden. In bekannter Weise wird danach in die Rohrwandung die Austrittsöffnung für das Wasser angebracht.

Mit dieser bekannten Vorrichtung erfolgt das Anpressen der Dosierelemente an die Innenwandung des Rohrkörpers und das Verbinden des Dosierelementes mit dem Rohrkörper hinter der Kalibriereinrichtung innerhalb der Kühleinrichtung. Dies bedeutet, dass sich der Rohrkörper, bis er die Anpress- und Verbindstelle erreicht, wegen des relativ langen Weges innerhalb der Kühleinrichtung um ein beträchtliches Mass abgekühlt hat. Um trotzdem eine gute Verbindung der Dosierelemente mit der Innenwandung des Rohrkörpers erreichen zu können, werden die Dosierelemente während des Zuführens durch eine Heizeinrichtung geführt und auf eine bestimmte Temperatur aufgeheizt. Eine derartige Heizeinrichtung ist jedoch aufwändig und umständlich. Ausserdem kann mit der oben beschriebenen Einrichtung kein Rohr mit einer Wandstärke von unter 0,2 mm hergestellt werden, da die Verschweissung des Dosierelementes mit dem Rohr nicht sicher erfolgt.

Eine gattungsgemässe Einrichtung gemäß dem Oberbegriff des Anspruchs 1, ist aus der WO 99/62691 bekannt. Mit dieser Einrichtung werden die vorgängig aufgeführten Nachteile eliminiert. Es ist aber insbesondere bei dickwandigeren Rohrkörpern schwierig, zum Anbringen der Bohrung die jeweilige Position der Dosierelemente feststellen zu können, vor allem wenn diese einen gegenseitigen Abstand haben, der unterschiedlich ist.

Die Aufgabe der vorliegenden Erfindung besteht somit darin, eine Vorrichtung zur Herstellung von Tropfbewässerungsrohren zu schaffen, bei welcher auf die Heizeinrichtung zum Aufheizen der zuzuführenden Dosierelemente verzichtet werden kann, mit welcher trotzdem eine optimale Verbindung zwischen den Dosierelementen und der Innenwandung des Rohrkörpers erreicht werden kann und mit welcher insbesondere die Position der Dosierelemente, die im Rohrkörper angebracht sind, von aussen feststellbar ist.

Erfindungsgemäss erfolgt die Lösung dieser Aufgabe dadurch, dass die Anpressrolle eine Einbuchtung aufweist, die der Aussenkontur des Rohrkörpers im Bereich der Kalibriereinrichtung entspricht, und dass mindestens im Grund der Einbuchtung der Anpressrolle eine über den gesamten Umfang verlaufende Markierungsstruktur angebracht ist, welche auf die Oberfläche des Rohrkörpers im Bereich des jeweiligen Dosierelementes übertragbar ist und dem Auffinden der Position des jeweiligen Dosierelementes zur Anbringung der Austrittsöffnung dient gemäß dem kennzeichnenden Teil des Anspruchs 1.

Mit dieser Anordnung wird vermieden, dass sich der extrudierte Rohrkörper während des Vorlaufs bis zum Ort, wo der Anpress- und Verbindvorgang mit den Dosierelementen stattfindet, zu stark abkühlt, so dass auf die Heizeinrichtung zum Aufheizen der zuzuführenden Dosierelemente verzichtet werden kann. Zudem wird ein gleichmässiger Druck der Anpressrolle über die gesamte Breite des Dosierelementes erreicht, die Verbindung wird optimal. Dadurch wird auf der äusseren Oberfläche des Rohrkörpers im Bereich der Dosierelemente die Markierungsstruktur optimal übertragen. Diese Markierung der Oberfläche des Rohrkörpers ermöglicht, dass die Position des Dosierelementes im Rohrkörper von aussen genau feststellbar ist, so dass die Bohrung für die Austrittsöffnung am richtigen Ort angebracht werden kann, unabhängig von den Abständen der Dosierelemente untereinander.

Eine vorteilhafte Ausgestaltung der Erfindung besteht darin, dass die Ausnehmung im lang gestreckten Körperbereich des rohrförmigen Körpers die Form eines Schlitzes aufweist, welcher sich vom Ende des in die Kühleinrichtung hineinragenden lang gestreckten Körperbereichs bis gegen die die Kühleinrichtung abschliessenden Wandung erstreckt, durch welche der lang gestreckte Körperbereich in die Kühleinrichtung eingeführt ist. Dadurch wird ein einfacher Aufbau erreicht.

In vorteilhafter Weise ist das Anpressglied als Anpressrolle ausgebildet. Dadurch wird sichergestellt, dass der Anpressdruck zum Verbinden der Dosierelemente mit der Innenwandung des Rohrkörpers über die gesamte Länge des Dosierelementes konstant ist, so dass diese optimal wird und die Gefahr ausgeschlossen wird, dass der Labyrinthdurchgang beispielsweise durch zu grosse Anpressung in einzelnen Bereichen beeinträchtigt wird.

Durch die Möglichkeit, den Anpressdruck der Anpressrolle an den Rohrkörper einstellen zu können, kann dieser an die Beschaffenheit des Rohres und des Dosierelementes angepasst werden.

Eine weitere vorteilhafte Ausgestaltung der Erfindung besteht darin, dass die Zuführeinrichtung eine Vereinzelungseinrichtung umfasst, in welcher von den kontinuierlich zugeführten Dosierelementen jeweils das nächste erfassbar ist, gesteuert auf die Führungsbahn ausstossbar ist und mittels einer Luftströmung entlang der Führungsbahn in den Rohrkörper einbringbar ist.

Dadurch können Tropfbewässerungsrohre hergestellt werden, deren Dosierelemente einen wählbaren Abstand haben voneinander. Dies ist insbesondere beispielsweise bei der Bewässerung von Bäumen oder Sträuchern vorteilhaft, indem das entsprechende Tropfbewässerungsrohr im Bereich der Wurzeln dieser Pflanzen mehrere Dosierelemente mit Austrittsöffnungen aufweist, die einen relativ kleinen Abstand haben voneinander. Zwischen den Pflanzen haben diese Tropfbewässerungsrohre über eine grössere Distanz aber keine Austrittsöffnungen mehr, wodurch dieser Zwischenbereich nicht auch noch bewässert wird.

In vorteilhafter Weise besteht die Vereinzelungseinrichtung aus zwei antreibbaren Rollen, die einander gegenüberliegend angeordnet sind, wobei jeweils ein Dosierelement von den kontinuierlich zugeführten Dosierelementen durch die beiden Rollen erfassbar, in eine Warteposition bringbar und von dieser auf die Führungsbahn ausstossbar ist. Dadurch lassen sich die Dosierelemente in optimaler Weise mit gewünschtem Abstand im Rohrkörper anbringen.

In der Führungsbahn ist ein Sensor angebracht, mit welchem das Erreichen der Warteposition des jeweiligen Dosierelementes feststellbar ist, wodurch ein störungsfreier Herstellungsablauf gewährleistet ist.

Die Luftströmung ist mit Luftdüsen erzeugbar, die aus Zuführleitungen gebildet sind, die in die Führungsbahn münden, wobei die Zuführleitungen so angeordnet sind, dass der jeweils austretende Luftstrom mit einem Winkel von etwa 25° auf das vorzuschiebende Dosierelement auftrifft. Damit wird ein sehr schneller und einfacher Transport der Dosierelemente erreicht, die Genauigkeit ist gewährleistet.

Eine Ausführungsform der vorliegenden Erfindung wird nachfolgend anhand der beiliegenden Zeichnung beispielhaft näher erläutert.

Es zeigt:
Fig. 1 eine schematische Schnittdarstellung der erfindungsgemässen Vorrichtung im Bereich der Vereinzelungseinrichtung, der Extrusionseinrichtung, der Kalibriereinrichtung und der Kühleinrichtung;
Fig. 2 eine schematische Darstellung der Kalibriereinrichtung mit der Anordnung der Anpressrolle;
Fig. 3 eine Querschnittdarstellung im Bereich der Anpressrolle quer zur Laufrichtung des extrudierten Rohrkörpers; entlang Linie II-II gemäss Fig. 1 und
Fig. 4 im Schnitt den Verbindungsbereich des Dosierelementes mit dem Rohrkörper mit der übertragenen Markierungsstruktur, die in dieser Figur stark vergrössert dargestellt ist.

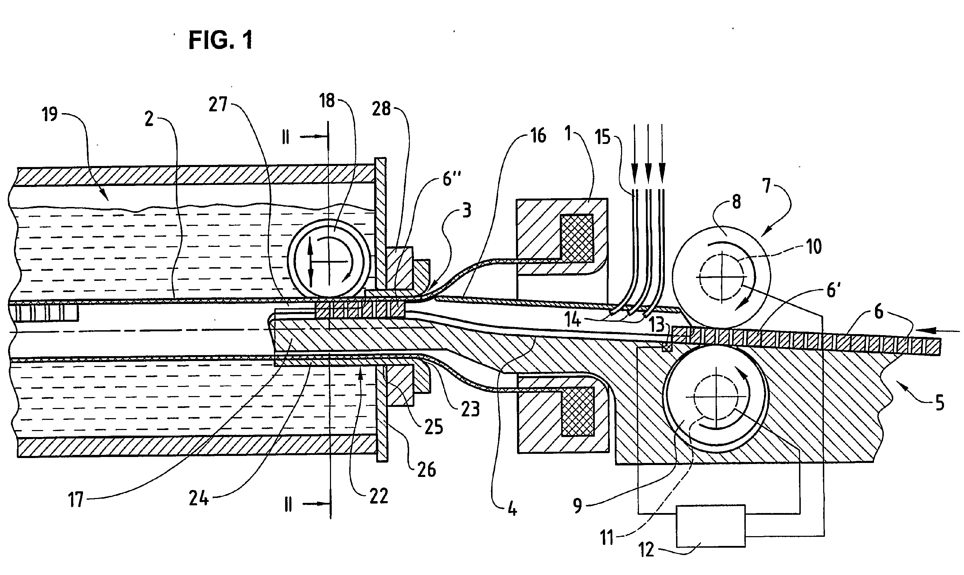

Fig. 1 zeigt eine Extrusionseinrichtung 1, aus welcher ein Rohrkörper 2 in bekannter Weise extrudiert wird. Dieser Rohrkörper 2 wird in eine Kalibriereinrichtung 3 eingeleitet und auf das gewünschte Mass gebracht. In bekannter Weise durchläuft der kalibrierte Rohrkörper 2 nach der Kalibriereinrichtung 3 eine Kühleinrichtung 19. Der Rohrkörper 2 wird zur Weiterverarbeitung durch nicht dargestellte Einrichtungen geführt und kann beispielsweise aufgewickelt werden.

In den Rohrkörper 2 hinein ragt eine Führungsbahn 4, die die Fortsetzung einer Zuführeinrichtung 5 für Dosierelemente 6 bildet, über welche die Dosierelemente 6 in bekannter Weise und in ununterbrochener Reihe einer Vereinzelungseinrichtung 7 zugeführt werden.

Die Vereinzelungseinrichtung 7 umfasst zwei antreibbare Rollen 8 und 9, die einander gegenüberliegend sind. Die beiden Rollen 8 und 9 sind mit einem schematisch dargestellten Antrieb 10 bzw. 11 ausgestattet, welche die beiden Rollen 8 und 9 in Pfeilrichtung antreiben können. Die beiden Antriebe 10 und 11 sind mit einer schematisch dargestellten Steuereinrichtung 12 verbunden.

Das vorderste Dosierelement 6' der durch die Zuführeinrichtung 5 zugeführten Dosierelemente 6 ist durch die beiden Rollen 8 und 9 ergriffen worden und in die hier dargestellte Warteposition gebracht worden. Diese Warteposition wird durch einen in der Führungsbahn 4 angebrachten Sensor 13 überwacht, der ebenfalls mit der Steuereinrichtung 12 verbunden ist.

Aus dieser Warteposition wird, wenn der Befehl von der Steuereinrichtung 12 ausgegeben wird, das Dosierelement 6' mit grosser Beschleunigung der angetriebenen Rollen 8 und 9 in die Führungsbahn 4 hinausbefördert. Durch die grosse Beschleunigung entsteht zwischen dem hinausbeförderten Dosierelement 6' und dem nachfolgenden Dosierelement 6 ein Zwischenraum. Die Geschwindigkeit der Rollen wird reduziert, das nachfolgende Dosierelement 6 wird durch die Rollen 8 und 9 erfasst und wiederum in die Warteposition gebracht, wonach die Rollen 8 und 9 bis zum nächsten Empfang eines Signals still stehen.

Das in die Führungsbahn hinausbeförderte Dosierelement wird durch eine Luftströmung erfasst und weiter transportiert.

Die Luftströmung ist durch Luftdüsen 14 in der Führungsbahn 4 erzeugbar, welche Luftdüsen 14 durch Zuführleitungen 15 gebildet sind, welche in eine Abdeckung 16 münden, die die Führungsbahn 4 gegen oben abschliesst. Um einen schnellen und optimalen Transport der Dosierelemente über die Führungsbahn 4 zu erreichen, sind die Zuführleitungen 15 so angeordnet, dass der jeweils austretende Luftstrom mit einem Winkel von etwa 25° auf das vorzuschiebende Dosierelement auftrifft. Dabei wird das Dosierelement mit einer Geschwindigkeit transportiert, die grösser ist als die Geschwindigkeit des extrudierten Rohres. Das Dosierelement kann beispielsweise eine Geschwindigkeit von etwa 50 m/s erreichen.

Mit dieser Luftströmung gelangt das Dosierelement über die Führungsbahn 4 in den Bereich der Kalibriereinrichtung 3 und wird vom vorlaufenden extrudierten Rohrkörper 2, der die Kalibriereinrichtung 3 durchläuft, mitgenommen. Diese Kalibriereinrichtung 3 ist aus einem rohrförmigen Körper 22 gebildet, dessen Einführbereich 23 trompetenförmig ausgebildet ist und sich auf den gewünschten Durchmesser des Rohrkörpers 2 verengt. An den Einführbereich schliesst sich ein lang gestreckter Körperbereich 24 an, welcher durch eine Öffnung 25 in einer die Kühleinrichtung 19 abschliessenden Wandung 26 geführt ist und in die Kühleinrichtung 19 hineinragt. Im hier dargestellten Ausführungsbeispiel ist zwischen dem trompetenförmigen Einführbereich 23 und der Wandung 26 der Kühleinrichtung eine Zwischenplatte 28 eingelegt.

Der lang gestreckte Körperbereich 24 ist mit einer Ausnehmung 27 versehen, in welche ein als Anpressrolle 18 ausgebildetes Anpressglied hineinragt.

Am Endbereich der Führungsbahn 4 ist ein Anpresselement 17 angeordnet, auf welchem das Dosierelement 6", das durch den Rohrkörper 2 mitgenommen wird, abgestützt wird. Mit dem Anpresselement 17 wirkt die Anpressrolle 18 zusammen, die aussenseitig an den Rohrkörper 2 anpressbar ist. Durch die Anpressrolle 18, welche mit der Anlagengeschwindigkeit synchronisiert ist, und das Anpresselement 17 wird das Dosierelement 6" in den noch sehr weichen Rohrkörper 2 eingepresst und mit diesem verbunden. Durch die Verwendung einer Anpressrolle 18 erhält man über die gesamte Länge des Dosierelementes 6" einen gleich bleibenden Druck, so dass die Verbindung zwischen Dosierelement 6" und Rohrkörper 2 in optimaler Weise erfolgen kann. In bekannter Weise lässt sich der Anpressdruck der Anpressrolle 18 einstellen und an die vorliegenden Verhältnisse anpassen.

In bekannter Weise durchläuft danach der Rohrkörper 2 die Kühleinrichtung 19, wo der Rohrkörper 2 abgekühlt wird.

Um eine optimale Verbindung zwischen Dosierelement und Rohrkörper 2 zu erreichen, ist die Anpressrolle 18 innerhalb der Kalibriereinrichtung 3 angeordnet, so dass das Material des Rohrkörpers 2 im Verbindungsbereich noch nicht zu stark abgekühlt ist.

Über die Steuerung 12 lässt sich die Intervallgrösse des Ausstossens des jeweiligen Dosierelementes 6' auf die Führungsbahn 4 beliebig programmieren. Die Zeitspanne nach dem Ausstossen des Dosierelementes 6' aus den Rollen 8 und 9 bis zum Erreichen des Rohrkörpers ist sehr klein und konstant. Somit lässt sich der Abstand eines in den Rohrkörper 2 eingesetzten Dosierelementes zum nachfolgenden Dosierelement bei gegebener Vorschubgeschwindigkeit des Rohrkörpers 2 sehr genau bestimmen. Der Abstand kann demzufolge praktisch beliebig gross gehalten werden, wodurch Tropfbewässerungsrohre hergestellt werden können, die an den gewünschten Stellen mit Dosierelementen und Austrittsöffnungen versehen werden können.

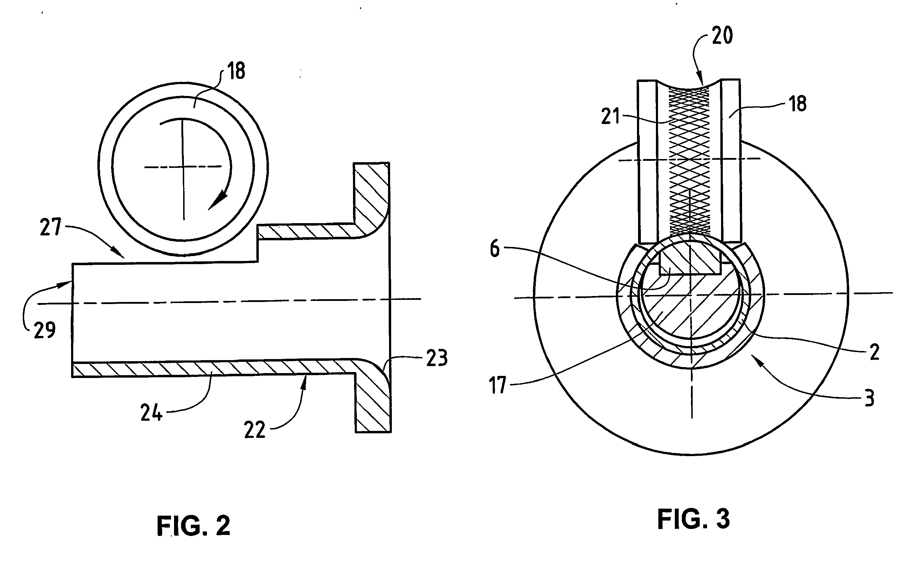

Fig. 2 zeigt den rohrförmigen Körper 22, der die Kalibriereinrichtung 3 bildet und sich aus dem Einführbereich 23, der trompetenförmig ausgebildet ist, und dem lang gestreckten Körperbereich 24 zusammensetzt. Vom Ende 29 des in die Kühleinrichtung 19 (Fig. 1) hineinragenden lang gestreckten Körperbereichs 24 her bis gegen die die Kühleinrichtung 19 abschliessenden Wandung 26 erstreckt sich die Ausnehmung 27, die die Form eines Schlitzes aufweist. In diesen Schlitz 27 ragt die Anpressrolle 18.

Mit dieser Ausgestaltung wird erreicht, dass die Strecke, die der extrudierte Rohrkörper mit den Dosierelementen innerhalb der Kühleinrichtung durchlaufen muss, bis es an die Stelle gelangt, wo die Anpressung des Dosierelementes mit der Innenwandung des Rohrkörpers und somit die Verbindung erfolgt, sehr gering gehalten werden kann. Der Rohrkörper kühlt nicht zu stark ab, die Verbindung zwischen der Innenwandung des Rohrkörpers mit den Dosierelementen wird optimal, ohne dass die Dosierelemente vorgewärmt werden müssen.

Fig. 3 zeigt im Schnitt die Kalibriereinrichtung 3, durch welche der Rohrkörper 2 geleitet wird. In den Rohrkörper 2 hinein ragt, wie zu Fig. 1 beschrieben worden ist, das Anpresselement 17. Auf diesem Anpresselement 17 wird das Dosierelement 6 an die Innenwandung des Rohrkörpers 2 angelegt. Die äussere Oberfläche des Rohrkörpers 2 ist in Kontakt mit der Anpressrolle 18. Durch das Anpresselement 17 und die mit diesem zusammenwirkende Anpressrolle 18 wird das Dosierelement 6 in den Rohrkörper 2 eingedrückt und mit diesem verbunden. Um eine optimale Verbindung zu erhalten, ist die Anpressrolle 18 mit einer Einbuchtung 20 versehen, die der Aussenkontur des Rohrkörpers 2 im Bereich der Kalibriereinrichtung 3 entspricht. In vorteilhafter Weise ist das Dosierelement 6 auf der Verbindungsseite mit dem Rohrkörper 2 ebenfalls bombiert ausgebildet.

Im Grund der Einbuchtung 20 der Anpressrolle 18 kann eine über den gesamten Umfang verlaufende Markierungsstruktur 21 angebracht sein. Diese Markierungsstruktur 21 kann beispielsweise eine feine Rändelung sein.

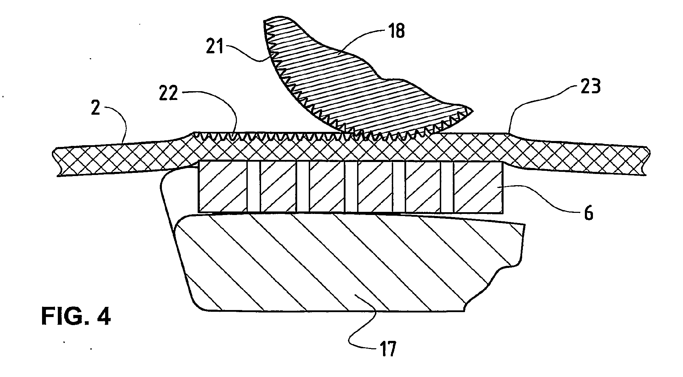

Wie aus Fig. 4 ersichtlich ist, wird diese Markierungsstruktur 21, die in Fig. 4 stark vergrössert dargestellt ist, in die Oberfläche des Rohrkörpers 2 übertragen, da der Rohrkörper in diesem Bereich noch sehr weich ist. Hierbei wird diese Markierungsstruktur 21 nur dort übertragen, wo ein Gegendruck vorhanden ist, das heisst lediglich über die Länge des Dosierelementes 6, das mit dem Rohrkörper 2 verbunden wird. Beim Eindrücken des Dosierelementes 6 in die Wandung des Rohrkörpers 2 entsteht aussenseitig eine Ausbuchtung 23, die der Aussenkontur des Dosierelementes 6 entspricht. Dadurch wird der Effekt unterstützt, dass die Markierungsstruktur 21 nur im Bereich des Dosierelementes 6 auf die Oberfläche des Rohkörpers 2 übertragen wird. Wenn kein Dosierelement 6 zwischen dem Anpresselement 17 und der Anpressrolle 18 vorhanden ist, entsteht kein Druck auf die Anpressrolle 18, die Markierungsstruktur 21 wird somit nicht auf die Oberfläche des Rohrkörpers 2 übertragen.

Mit dieser Einrichtung erhält man somit an der Oberfläche des Rohrkörpers 2 an den Stellen, wo sich im Rohrkörper ein Dosierelement 6 befindet, ebenfalls eine Markierungsstruktur 22. Diese Markierungsstruktur 22 kann in bekannter Weise und nach dem Verlassen der Kühleinrichtung 19, wie dies in Fig. 1 ersichtlich ist, über Detektormittel erfasst werden, welche mit einer Bohreinrichtung zusammenwirken, so dass die Austrittsöffnung an der genau richtigen Stelle in den Rohrkörper 2 gebohrt werden kann. Dies ermöglicht ein korrektes Anbringen der Austrittsöffnungen im Rohrkörper, unabhängig davon, wie gross die Abstände zwischen den einzelnen eingesetzten Dosierelementen sind.

Es wäre auch denkbar, dass die Markierungsstruktur 21 an der Anpressrolle 18 eingefärbt wird, und dass diese Farbe mit der Markierungsstruktur 21 auf die Oberfläche des Rohrkörpers 2 übertragen wird, und so auf dem Rohrkörper 2 eine farbige Markierungsstruktur 22 entstehen würde, was unter Umständen den Detektierungsvorgang der Markierungsstruktur 22 auf dem Rohrkörper 2 erleichtern würde. Ein derartiges Bedrucken könnte beispielsweise mit einem Offsetdruckverfahren erreicht werden.

Mit der erfindungsgemässen Vorrichtung können Tropfbewässerungsrohre hergestellt werden, die mit Dosierelementen versehen sind, die einen beliebigen Abstand voneinander haben können, so dass die Dosierelemente und damit das tröpfchenweise Austreten von Wasser an der gewünschten Stelle des Tropfbewässerungsrohres angebracht werden kann. Derartige Tropfbewässerungsrohre können somit in beliebiger Weise an die jeweilige Bepflanzungsanordnung angepasst werden.

## Patentansprüche

1. Vorrichtung zur kontinuierlichen Herstellung von Tropfbewässerungsrohren, umfassend eine Extrusionseinrichtung (1) zur Erzeugung eines Rohrkörpers (2), eine Kalibriereinrichtung (3) und eine Kühleinrichtung (19) für den Rohrkörper (2), eine Zuführeinrichtung (5) für Dosierelemente (6) in den Rohrkörper (2) entlang einer Führungsbahn (4), und Mittel zum Verbinden der Dosierelemente (6) mit der Innenwandung des Rohrkörpers (2), bestehend aus einem Anpresselement (17), das durch den Endbereich der Führungsbahn (4) gebildet ist und in den extrudierten Rohrkörper (2) hineinragt, und einer Anpressrolle (18), die aussenseitig im Bereich des Anpresselementes (17) an den Rohrkörper (2) anpressbar ist, wobei die Kalibriereinrichtung (3) aus einem rohrförmigen Körper (22) gebildet ist, dessen Einführbereich (23) sich auf den gewünschten Durchmesser des Rohrkörpers (2) verengt und dessen lang gestreckter Körperbereich (24) in die Kühleinrichtung (19) hineinragt und mit einer Ausnehmung (27) versehen ist, in welche die Anpressrolle (18) hineinragt, so dass der Anpress- und Verbindvorgang der Dosierelemente (9) mit der Innenwandung des Rohrkörpers (2) innerhalb der Kalibriereinrichtung (3) erfolgt, **dadurch gekennzeichnet, dass** die Anpressrolle (18) eine Einbuchtung (20) aufweist, die der Aussenkontur des Rohrkörpers (2) im Bereich der Kalibriereinrichtung (3) entspricht, und dass mindestens im Grund der Einbuchtung (20) der Anpressrolle (18) eine über den gesamten Umfang verlaufende Markierungsstruktur (21) angebracht ist, welche auf die Oberfläche des Rohrkörpers (2) im Bereich des jeweiligen Dosierelementes (6) übertragbar ist und dem Auffinden der Position des jeweiligen Dosierelementes (6) zur Anbringung der Austrittsöffnung dient.

2. Vorrichtung nach Anspruch 1, **dadurch gekennzeichnet, dass** die Ausnehmung (27) im lang gestreckten Körperbereich (24) des rohrförmigen Körpers (22) die Form eines Schlitzes aufweist, welcher sich vom Ende (29) des in die Kühleinrichtung (19) hineinragenden lang gestreckten Körperbereichs (24) bis gegen die die Kühleinrichtung (19) abschliessenden Wandung (26) erstreckt, durch welche der lang gestreckte Körperbereich (24) in die Kühleinrichtung (19) eingeführt ist.

3. Vorrichtung nach Anspruch 1 oder 2, **dadurch gekennzeichnet, dass** der Anpressdruck der Anpressrolle (18) an den Rohrkörper (2) einstellbar ist.

4. Vorrichtung nach einem der Ansprüche 1 bis 3, **dadurch gekennzeichnet, dass** die Zuführeinrichtung (4, 5) eine Vereinzelungseinrichtung (7) umfasst, in welcher von den kontinuierlich zugeführten Dosierelementen (6) jeweils das nächste erfassbar ist, gesteuert auf die Führungsbahn (4) ausstossbar ist und mittels einer Luftströmung entlang der Führungsbahn (4) in den Rohrkörper (2) einbringbar ist.

5. Vorrichtung nach Anspruch 4, **dadurch gekennzeichnet, dass** die Vereinzelungseinrichtung (7) aus zwei antreibbaren Rollen (8, 9) gebildet ist, die einander gegenüberliegend angeordnet sind, und dass jeweils ein Dosierelement (6') von den kontinuierlich zugeführten Dosierelementen (6) durch die beiden Rollen (8, 9) erfassbar, in eine Warteposition bringbar und von dieser auf die Führungsbahn (4) ausstossbar ist.

6. Vorrichtung nach Anspruch 5, **dadurch gekennzeichnet, dass** in der Führungsbahn (4) ein Sensor (13) angebracht ist, mit welchem das Erreichen der Warteposition des jeweiligen Dosierelementes (6') feststellbar ist.

7. Vorrichtung nach einem der Ansprüche 4 bis 6, **dadurch gekennzeichnet, dass** die Luftströmung mit Luftdüsen (14) erzeugbar ist, die aus Zuführleitungen (15) gebildet sind, die in die Führungsbahn (4) münden, und dass die Zuführleitungen (15) so angeordnet sind, dass der jeweils austretende Luftstrom mit einem Winkel von etwa 25° auf das vorzuschiebende Dosierelement (6) auftrifft.

## Claims

1. Device for continuous manufacture of drip irrigation tubes, comprising an extruding device (1) for producing a tube body (2), a sizing device (3), and a cooling device (19) for the tube body (2), a feed apparatus (5) for feeding metering elements (6) into the tube body (2) along a guideway (4), and means for connecting the metering elements (6) to the inner walling of the tube body (2), comprising a pressing element (17), which is formed by the end area of the guideway (4) and which protrudes into the extruded tube body (2), and a pressing roller (18), which is able to be pressed against the tube body (2) from the exterior in the region of the pressing element (17), the sizing device (3) being formed by a tubular body (22), whose feed region (23) narrows to the desired diameter of the tube body (2) and whose longitudinally elongated body area (24) protrudes into the cooling device (19), and is provided with a recess (27) into which the pressing member (18) protrudes so that the pressing and connecting process of the metering elements (9) with respect to the inner walling of the tube body (22) ensues inside the sizing device (3), **characterised in that** the pressing roller (18) has an indentation (20), which corresponds to the outer contour of the tube body (2) in the region of the sizing device (3), and **in that** at least at the bottom of the indentation (20) of the pressing roller (18) a marking structure (21) is applied running over the entire circumference, which marking structure is transferable to the surface of the tube body (2) in the region of the respective metering element (6), and serves location of the position of the respective metering element (6) for putting in the outlet aperture.

2. Device according to claim 1, **characterised in that** the recess (27) in the longitudinally elongated body area (24) of the tubular body (22) has the form of a slot which extends from the end (29) of the longitudinally elongated body area (24), protruding into the cooling device (19), to the walling (26) closing off the cooling device (19), through which the longitudinally elongated body area (24) is led into the cooling device (19).

3. Device according to claim 1 or 2, **characterised in that** the pressing pressure of the pressing roller (18) against the tube body (2) is adjustable.

4. Device according to one of the claims 1 to 3, **characterised in that** the feed apparatus (4, 5) comprises a separating device (7), in which the next of the continuously fed metering elements (6) is able to be captured in each case, is able to be ejected in a controlled manner onto the guideway (4), and is able to be inserted into the tube body (2) by means of an airstream along the guideway (4).

5. Device according to claim 4, **characterised in that** the separating device (7) is made up of two drivable rollers (8, 9), disposed opposite one another, and **in that** in each case one metering element (6') of the continuously fed metering elements (6) is able to be captured by the two rollers (8, 9), is able to be brought into a waiting position, and is able to be ejected therefrom onto the guideway (4).

6. Device according to claim 5, **characterised in that** installed in the guideway (4) is a sensor (13), with which the reaching of the waiting position of the respective metering element (6') is detectable.

7. Device according to one of the claims 4 to 6, **characterised in that** the airstream is producible with air jets (14), which are formed by supply lines (15) that come out into the guideway (4), and **in that** the supply lines (15) are disposed such that the airstream coming out in each case hits the metering element (6) to be advanced at an angle of about 25°.

## Revendications

1. Dispositif pour la fabrication en continu de tuyaux d'irrigation goutte à goutte, comprenant un dispositif d'extrusion (1) pour la production d'un corps de tuyau (2), un dispositif de calibrage (3) et un dispositif de refroidissement (19) pour ledit corps de tuyau (2), un dispositif d'amenée (5) pour amener des éléments de dosage (6) dans ledit corps de tuyau (2) selon un chemin de guidage (4), et des moyens pour relier lesdits éléments de dosage (6) avec la paroi intérieure dudit corps de tuyau (2), constitués d'un élément de pressage (17) formé par la région d'extrémité dudit chemin de guidage (4) et faisant saillie dans ledit corps de tuyau extrudé (2), et d'un rouleau de pressage (18) susceptible d'être pressé contre ledit corps de tuyau (2) du côté extérieur de ce dernier au niveau dudit élément de pressage (17), ledit élément de calibrage (3) étant constitué d'un corps tubulaire (22) dont la région d'insertion (23) se rétrécit vers le diamètre désiré dudit corps de tuyau (2) et dont la région allongée de corps (24) fait saillie dans ledit dispositif de refroidissement (19) et est pourvue d'une échancrure (27) dans laquelle s'étend ledit rouleau de pressage (18) de manière à ce que le processus de pressage et de liaison desdits éléments de dosage (9) avec la paroi intérieure dudit corps de tuyau (2) s'effectue à l'intérieur dudit dispositif de calibrage (3), **caractérisé en ce que** ledit rouleau de pressage (18) comprend une indentation (20) qui correspond au contour extérieur dudit corps de tuyau (2) au niveau dudit dispositif de calibrage (3), et **en ce qu'**une structure de marquage (21) qui s'étend le long de la totalité de la circonférence est appliquée au moins au fonds de ladite indentation (20) dudit rouleau de pressage (18), et ladite structure de marquage est susceptible d'être transférée, au niveau de l'élément de dosage (6) respectif, à la surface dudit corps de tuyau (2) et destinée à trouver la position de l'élément de dosage (6) respectif pour mettre en place l'ouverture de sortie.

2. Dispositif selon la revendication 1, **caractérisé en ce que** ladite échancrure (27) dans la région allongée de corps (24) du corps tubulaire (22) a la forme d'une fente qui s'étend depuis l'extrémité (29) de la région allongée de corps (24) faisant saillie dans ledit dispositif de refroidissement (19) jusqu'à la paroi (26) limitant ledit dispositif de refroidissement (19) et à travers laquelle (26) la région allongée de corps (24) est insérée dans ledit dispositif de refroidissement (19).

3. Dispositif selon la revendication 1 ou 2, **caractérisé en ce que** la pression de pressage dudit rouleau de pressage (18) audit corps de tuyau (2) est ajustable.

4. Dispositif selon l'une quelconque des revendications 1 à 3, **caractérisé en ce que** ledit dispositif d'amenée (4, 5) comprend un dispositif de séparation (7) dans lequel, parmi les éléments de dosage (6) amenés en continu, le prochain est respectivement susceptible d'être saisi, d'être éjecté de manière commandée sur ledit chemin de guidage (4) et d'être inséré dans ledit corps de tuyau (2) par un courant d'air le long dudit chemin de guidage (4).

5. Dispositif selon la revendication 4, **caractérisé en ce que** ledit dispositif de séparation (7) est constitué de deux rouleaux susceptibles d'être entraînés (8, 9) et placés l'un en regard de l'autre, et **en ce qu'**un élément de dosage respectif (6') parmi les éléments de dosage (6) est susceptible d'être saisi par lesdits deux rouleaux (8, 9), est susceptible d'être amené dans une position d'attente et est susceptible d'être éjecté de cette dernière sur ledit chemin de guidage (4).

6. Dispositif selon la revendication 5, **caractérisé en ce que**, dans ledit chemin de guidage (4), un capteur (13) est arrangé par lequel l'arrivée dudit élément de dosage respectif (6') à la position d'attente est susceptible d'être détectée.

7. Dispositif selon l'une quelconque des revendications 4 à 6, **caractérisé en ce que** ledit courant d'air est susceptible d'être produit avec des buses d'air (14) formées par des conduites d'alimentation (15) débouchant dans ledit chemin de guidage (4), et **en ce que** lesdites conduites d'alimentation (15) sont arrangées de manière à ce que le courant d'air respectif sortant vienne heurter l'élément qui doit être avancé sous un angle d'environ 25°.
